# EUROPEAN PATENT APPLICATION

(11) **EP 0 521 570 A1**
(43) Date of publication of application: **07.01.1993**
(21) Application number: 92201952.6
(22) Date of filing: 01.07.1992
(51) Int. Cl.: B29C 67/14

(54) **Method for making an object from synthetic material**

(30) Priority: 01.07.1991 NL 9101140
(71) Applicant: Jagtenberg, Ingo Antonie Herbert, NL-6631 AM Horssen (NL)
(72) Inventor: Jagtenberg, Ingo Antonie Herbert, NL-6631 AM Horssen (NL)
(74) Representative: Lips, Hendrik Jan George, Ir.

(57) **Abstract**

Method for making an object (5) from synthetic material (4), such as e.g. a compost container. In the synthetic material a gauze (3), in particular from metal is either locally or not positioned in the synthetic material to prevent damaging of the object by rodents. During the manufacture of the object (5) by injection moulding or blowing into a mould (2) first the gauze (3) is applied against the wall (1) of this after which the object is manufactured in said mould.

## Description

The invention relates to a method for making an object from synthetic material.

In practice it has appeared that objects made from synthetic material can be damaged by rodents such as rats and mice.

This is in particular true when already openings are present in the wall or walls of such objects for one reason or another, such as is the case in so-called compost containers. In such containers household and garden refuse is brought into a state of fermentation to obtain a product which can be used anew. When the openings present in the bottom of such containers are made bigger by the rodents the process will not take place in the desired way and stink annoyance will arise.

Now the object of the invention is to provide a method for making objects from synthetic material in which this phenomenon will not appear at all or to a lesser degree only.

According to the invention this is obtained by positioning a gauze of netting or such like product in the synthetic material during the manufacture of the object, consisting of a material which is proof against rodents.

When an object is manufactured by injection moulding, blowing or in a corresponding way the gauze or netting or such like first can be brought against the wall of the mould, preceding the manufacture of the object in said mould.

Generally speaking the gauze or such like will be totally incorporated into the synthetic material. In special cases, however, the possibility exists that the related surface of the manufactured object will somewhat adjusts itself to the gauze or such like but, generally speaking, this will give no objections.

In particular it can be thought of a gauze from metal. Because the possibility exists that the gauze will locally come somewhat in sight in the manufactured object a corrosion proof metal can be chosen. Whether the synthetic material will totally flow around the gauze during the manufacture of the object will depent on the kind of synthetic material which is used. Also use can be made of a gauze which is made from plastified metal. Obviously in both cases it is important that a good connection is obtained between the gauze and the synthetic material form which the object is made.

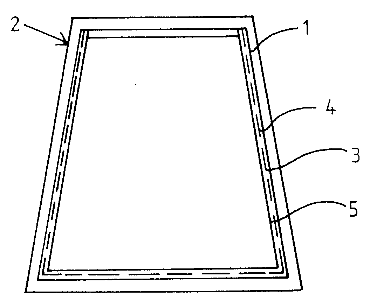

Now the invention is further described by means of an embodiment shown in the drawing which shows a cross section over a mould for the manufacture of an object from synthetic material in this, in particular by blowing.

In this case against the walls 1 of the mould 2 first a gauze 3 is applied which is indicated by dash lines and which may extend either or not over all the walls of the mould. After doing this the synthetic material 4 is blown against the gauze 3 and the walls 1 to obtain an object 5.

In a known way the mould will be divided into sections for making it possible to apply the gauze 3 in it and to remove the object 5 out of it. This, however, will be obvious for the expert and will need no further description.

## Claims

1. Method for making an object from synthetic material, characterized in that a gauze (3), a netting or such like product is positioned in the synthetic material (4) during the manufacture of the object (5), consisting of a material which is proof against rodents.

2. Method according to claim 1, characterized in that during the manufacture of the object (5) by injection moulding, blowing or in a corresponding way, the gauze (3), netting or such like product is first brought against the wall (1) of the mould (2) preceding the manufacture of the object (5) in said mould.

3. Method according to claim 1 or 2, characterized in that the gauze (3) consists of metal.

4. Object, in particular a compost container or such like product, manufactured by means of the method described in one or more of the preceding claims.
